# EUROPÄISCHE PATENTANMELDUNG

(11) **EP 3 800 754 A1**
(43) Veröffentlichungstag der Anmeldung: **07.04.2021**
(21) Anmeldenummer: 19201241.7
(22) Anmeldetag: 03.10.2019
(51) Int. Cl.: H02H 7/18, H02H 9/00, H02H 11/00

(54) **ELEKTRONISCHE SCHALTUNG ZUM SCHUTZ VOR VERPOLUNG EINES ANGESCHLOSSENEN GERÄTS**

(71) Anmelder: Siemens Aktiengesellschaft, 80333 München (DE)
(72) Erfinder: Berger, Erik, 1030 Wien (AT)
(74) Vertreter: Maier, Daniel Oliver

(57) **Zusammenfassung**

Elektronische Schaltung zum Schutz vor Verpolung eines angeschlossenen Geräts (PSU1), umfassend zwei Schalter (T1, T2), zwei Dioden (D1, D2), eine Kapazität (C1), eine Induktivität (L1), zwei Steuerschaltungen (S1, S2), wobei die erste Diode (D1) die ersten Anschlüsse (T1S, T2S) des ersten und zweiten Schalters (T1, T2) verbindet,
und die erste Steuerschaltung (S1) zwischen dem ersten Anschluss (T1S) und dem Steuer-Anschluss (T1G) des ersten Schalters (T1) vorgesehen ist, und
und die zweite Steuerschaltung (S2) zwischen dem ersten Anschluss (T2S) und dem Steuer-Anschluss (T2G) des zweiten Schalters (T2) vorgesehen ist, und
ferner die Kapazität (C1) den zweiten Anschluss (T1D) des ersten Schalters (T1) mit dem ersten Anschluss (T2S) des zweiten Schalters (T2) verbindet, und
der zweite Schalter (T2), die erste Diode (D1), die Induktivität (L1) und die zweite Diode (D2) eine zweite Reihenschaltung (P2) zwischen dem zweiten Anschluss (T2D) des zweiten Schalters (T2) und der Kathode der zweiten Diode (D2) bilden,
wobei die Steuerschaltungen (S1, S2) Mittel aufweisen, sodass bei Anlegen einer positiven ersten Spannung (U1) an die erste Reihenschaltung (P1) gegenüber dem zweiten Anschluss (T2D) des zweiten Schalters (T2) zunächst der erste Schalter (T1), und anschließend der zweite Schalter (T2) leitend wird.

## Beschreibung

Die Erfindung betrifft eine elektronische Schaltung zum Schutz vor Verpolung eines angeschlossenen Geräts.

Schaltungen für mobile Geräte oder unterbrechungsfreie Stromversorgungen (USV) werden häufig mit Batterien oder Akkumulatoren betrieben, wobei beide Einheiten trennbar miteinander verbunden sind, um einen Batteriewechsel zu ermöglichen. Bei Herstellen einer Verbindung zwischen diesen beiden Einheiten kann es beispielsweise durch einen Bediener ungewollt zu einem falsch gepolten, also "verpolten" Anschluss kommen, was die Schaltung oder die Batterie zerstören kann.

Durch eine Verpolungs-Schutzschaltung soll eine Beschädigung eines USV-Gerätes bei einem falsch gepolten Anschluss der Batterie verhindert werden.

Bekannte Schaltungen für einen Verpolschutz sind meist in einer der Zuleitungen des Geräts zur Batterie eingebaut. Im Pufferbetrieb der USV, das heißt beim Betrieb aus dem Akkumulator/ der Batterie entsteht hier jedoch durch den Verpolschutz selbst eine unerwünschte Verlustleistung.

In bekannten Lösungen wird eine getaktete Strombegrenzung beim Zuschalten der Batterie an den Sekundärkreis eingesetzt. Dies kann als zentrale Lösung bezeichnet werden, wobei am Innenwiderstand eines Transistors die Verlustleistung entsteht und eine entsprechende Kühlung vorgesehen werden muss. Transistoren mit niedrigem Innenwiderstand sind teuer.

Es ist Aufgabe der Erfindung eine Lösung für einen Verpolschutz vorzusehen, welcher die Nachteile im Stand der Technik überwindet.

Die Aufgabe wird durch eine elektronische Schaltung zum Schutz vor Verpolung eines angeschlossenen Geräts gelöst, umfassend einen ersten und einen zweiten Schalter mit jeweils einem ersten Anschluss, einem zweiten Anschluss und einem Steuer-Anschluss, eine erste und eine zweite Diode, eine Kapazität, eine Induktivität, eine erste und eine zweite Steuerschaltung,
wobei eine erste Reihenschaltung zwischen einem ersten und einem zweiten Kontaktpunkt den ersten und den zweiten Schalter und die erste Diode umfasst, und die Kathode der ersten Diode zum zweiten Kontaktpunkt hin orientiert ist,
und eine zweite Reihenschaltung zwischen einem dritten und einem vierten Kontaktpunkt den zweiten Schalter, die erste und die zweiten Diode und die Induktivität umfasst, und die Kathode der zweiten Diode zum dritten Kontaktpunkt hin orientiert ist,
und eine dritte Reihenschaltung zwischen dem zweiten und dem dritten Kontaktpunkt den ersten Schalter, die Induktivität und die zweite Diode umfasst,
und die erste Steuerschaltung den ersten Anschluss (und den Steuer-Anschluss des ersten Schalters verbindet, und
und die zweite Steuerschaltung den ersten Anschluss und den Steuer-Anschluss des zweiten Schalters verbindet, und
ferner die Kapazität den zweiten Kontaktpunkt mit dem ersten Anschluss des zweiten Schalters verbindet, und
und die erste und zweite Steuerschaltung Mittel aufweisen, welche bei Anlegen einer ersten Spannung an den zweiten Kontaktpunkt gegenüber dem ersten Kontaktpunkt so konfiguriert sind, sodass,
falls die erste Spannung einen positiven Wert annimmt, zunächst eine erste und zweite Steuer-Spannung zur Steuerung des ersten und zweiten Schalters erzeugt werden, welche dazu vorgesehen sind, dass zunächst der erste Schalter und anschließend der zweite Schalter leitet, und
falls die erste Spannung einen negativen Wert annimmt, die erste und zweite Steuer-Spannung erzeugt werden, welche dazu vorgesehen sind, dass der erste und der zweite Schalter sperren.

Mit anderen Worten ist die Kathode der ersten Diode über einen geschlossenen ersten Schalter mit dem zweiten Kontaktpunkt verbunden, und die Anode der ersten Diode ist über einen geschlossenen zweiten Schalter mit dem ersten Kontaktpunkt verbunden.

Einfach gesagt, sieht die Erfindung einen Schutz des Geräts vor einem Kursschluss durch Verwendung der ersten Freilaufdiode und des zweiten Schalters in Serie als Verpolschutz vor.

Durch einen dezentral angeordneten Verpolschutz-Schalter wird im Fehlerfall, das heißt wenn eine Batterie mit falscher Polung angeschlossen ist, keine Verlustleistung gebildet.

Der erste Schalter, die erste Diode, die Induktivität und die zweite Diode bilden eine getaktete Strombegrenzung beim Zuschalten der Batterie an das angeschlossene Gerät.

Der zweite Schalter ist nur kurzzeitig während des Zuschaltvorgangs aktiv, das heißt während die Eingangsstrombegrenzung aktiv ist. Daher sind Verluste vernachlässigbar und der zweite Schalter muss keinen besonders niedrigen Innenwiderstand und keine besondere Kühlung aufweisen. Dies vereinfacht den Aufbau und reduziert die Kosten der Schaltung.

Der zweite Schalter, der als Verpolschutz dient, ist im Freilaufzweig der Strombegrenzung angeordnet und erzeugt keine Verluste im Puffer- bzw. Normalbetrieb. Daher kann diese Anordnung als annähernd verlustfrei bezeichnet werden.

Die Verpolschutz-Schaltung wird mittels der ersten Steuerschaltung über ein Hilfspotential für den ersten Schalter aktiviert.

Die erste und zweite Steuerschaltung erzeugt jeweils ein inverses Steuersignal, jedoch mit einer Phasenverschiebung. Der erste Schalter verbindet somit erst den Freilaufkreis, wenn die Polarität entsprechend vorliegt.

In einer Weiterbildung der Erfindung ist es vorgesehen, dass die erste Spannung die Betriebsspannung eines Akkumulators oder einer Batterie ist.

Die Verwendung der Schaltung zum Schutz eines Akkumulators oder einer Batterie ist besonders sinnvoll, da der nahezu verlustfreie Betrieb der Schaltung eine lange Betriebszeit des Geräts im Pufferbetrieb ermöglicht.

In einer Weiterbildung der Erfindung ist es vorgesehen, dass der erste und zweite Schalter jeweils ein FeldeffektTransistor ist, bevorzugt ein MOSFET, besonders bevorzugt ein n-Kanal MOSFET.

Dadurch kann auf besonders einfache Weise ein besonders hoher Wirkungsgrad der Schaltung erreicht werden.

In einer Weiterbildung der Erfindung ist es vorgesehen, dass das Mittel der zweiten Steuerschaltung gemeinsam mit der Kapazität ein Zeitglied bildet.

Dadurch kann auf eine einfache Weise ein verzögerter Betrieb der zweiten Steuerschaltung gegenüber der ersten Steuerschaltung erreicht werden.

In einer optionalen Weiterbildung der Erfindung ist es vorgesehen, dass in die zweite Reihenschaltung ein Shunt-Widerstand in Serie eingefügt ist, an welchem eine dritte Spannung messbar ist. Ein Shunt-Widerstand weist üblicherweise einen niedrigen ohmschen Widerstandwert auf.

Dadurch kann auf einfache Weise eine Überwachung des Betriebs des Geräts erfolgen.

In einer Weiterbildung der Erfindung ist es vorgesehen, dass ferner ein dritter und ein vierter Schalter mit jeweils einem ersten Anschluss, einem zweiten An-schluss und einem Steuer-Anschluss umfasst sind, und die ersten Anschlüsse des dritten und vierten Schalters miteinander verbunden sind, und der zweite Anschluss des dritten Schalters mit dem zweiten Kontaktpunkt, sowie der zweite Anschluss des vierten Schalters mit dem dritten Kontaktpunkt verbunden ist, und ferner eine dritte Steuerschaltung vorgesehen ist, Mittel aufweist, welche bei Anlegen einer ersten Spannung an den zweiten Kontaktpunkt gegenüber dem ersten Kontaktpunkt so konfiguriert ist, sodass,
falls die erste Spannung einen positiven Wert annimmt, der dritte und vierte Schalter leiten, wenn die erste Spannung einen positiven Wert annimmt, und
falls die erste Spannung einen negativen Wert annimmt, der dritte und vierte Schalter sperren.

Dadurch wird erreicht, dass im Pufferbetrieb zusätzlich der erste Schalter, die Induktivität und die zweite Diode mittels des dritten und vierten Schalters überbrückt werden, und die Effizienz der Schaltung weiter gesteigert werden kann.

In einer Weiterbildung der Erfindung ist es vorgesehen, dass der dritte und vierte Schalter jeweils ein FeldeffektTransistor ist, bevorzugt ein MOSFET, besonders bevorzugt ein n-Kanal MOSFET.

Dadurch kann auf besonders einfache Weise ein besonders hoher Wirkungsgrad der Schaltung erreicht werden und eine sehr kleine und kostengünstige Kühlvorrichtung für die Schalter reicht aus.

In einer Weiterbildung der Erfindung ist es vorgesehen, dass die erste und/oder zweite Steuerschaltung und/oder dritte Steuerschaltung jeweils Mittel aufweisen, welche aus einer zugeführten Spannung eine Spannung zur Steuerung des ersten und/oder zweiten und/oder dritten und/oder vierten Schalters vom sperrenden in den leitenden Zustand erzeugen.

Dadurch kann für die jeweilige Steuerschaltung eine entsprechende Spannung erzeugt werden, um die Schalter anzusteuern. Die Mittel können beispielsweise durch ohmsche Spannungsteiler gebildet sein.

Die erfindungsgemäße Aufgabe wird auch durch ein System zum Betrieb einer unterbrechungsfreien Stromversorgung gelöst, umfassend einen Akkumulator oder einer Batterie und eine erfindungsgemäße Schaltung, wobei die erste Spannung durch die Betriebsspannung der Akkumulators bzw. der Batterie gebildet ist und die zweite Spannung zum Betrieb der unterbrechungsfreien Stromversorgung vorgesehen ist.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel der Erfindung.
- Fig. 2: ein weiteres Ausführungsbeispiel der Erfindung mit einer zusätzlichen Überbrückung.

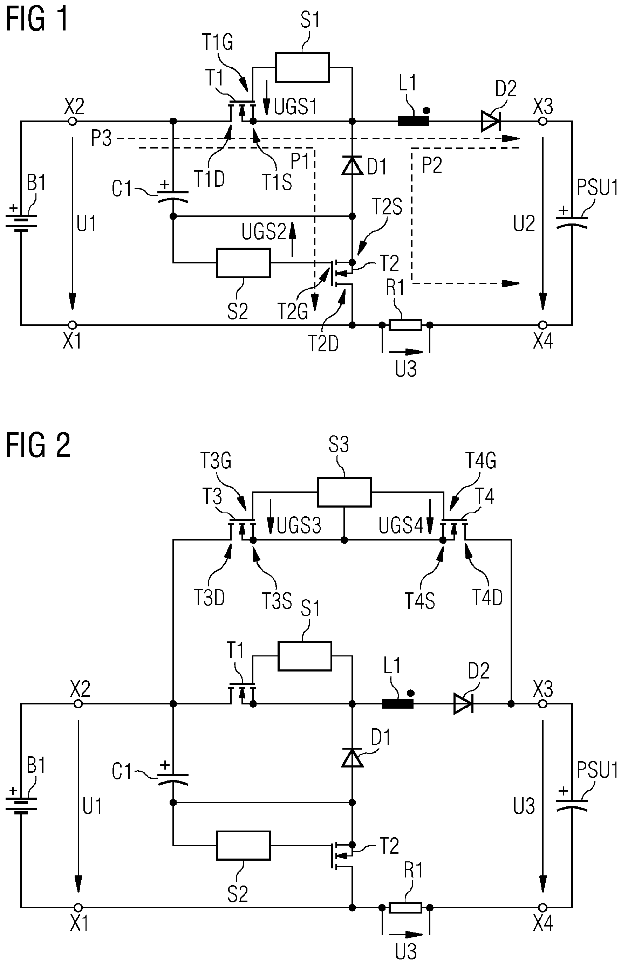

**Fig. 1** zeigt ein Ausführungsbeispiel einer erfindungsgemäßen Schaltung.

Eine elektronische Schaltung zum Schutz vor Verpolung eines angeschlossenen Geräts PSU1 umfasst einen ersten Schalter T1 und einen zweiten Schalter T2, eine erste Diode D1 und eine zweite Diode D2, eine Kapazität C1, eine Induktivität L1, eine erste Steuerschaltung S1 und eine zweite Steuerschaltung S2.

Der erste und zweite Schalter T1, T2 ist jeweils ein n-Kanal MOSFET.

Der erste und zweite Schalter T1, T2 weisen jeweils einen ersten (Source-) Anschluss T1S, T2S, einen zweiten (Drain-) Anschluss T1D, T2D und einen (Gate-) Steuer-Anschluss T1G, T2G auf.

Die Schaltung ist mittels Verbindungs-Kontaktpunkte X0 und X1 lösbar an einer Batterie B1 mit einer ersten Spannung U1 angeschlossen zu werden.

Das Gerät PSU1, beispielsweise eine unterbrechungsfreie Stromversorgung (USV), ist mittels Verbindungs-Kontaktpunkte X0A und X2 angeschlossen und weist eine zweite Spannung U1 als Betriebsspannung auf.

Die Verbindungs-Kontaktpunkte X0 und X0A liegen auf demselben elektrischen Masse-Potential und sind in diesem Beispiel nur über einen niederohmigen Shunt-Widerstand R1 voneinander getrennt.

Die erste Spannung U1 ist somit die Betriebsspannung einer Batterie B1.

Die erste Diode D1 verbindet die ersten Anschlüsse T1S, T2S des ersten und zweiten Schalters T1, T2.

Die Kathode der ersten Diode D1 ist mit dem ersten Schalter T1 verbunden.

Dadurch ist zwischen den zweiten Anschlüssen T1D, T2D des ersten und zweiten Schalters T1, T2, welche mit den Verbindungs-Kontaktpunkten X0 und X1 verbunden sind, eine erste Reihenschaltung P1 gebildet.

Die erste Steuerschaltung S1 ist zwischen dem ersten Anschluss T1S und dem Steuer-Anschluss T1G des ersten Schalters T1 vorgesehen.

Die zweite Steuerschaltung S2 ist zwischen dem ersten Anschluss T2S und dem Steuer-Anschluss T2G des zweiten Schalters T2 vorgesehen.

Ferner verbindet die Kapazität C1 den zweiten Anschluss T1D des ersten Schalters T1 mit dem ersten Anschluss T2S des zweiten Schalters T2.

Der zweite Schalter T2, die erste Diode D1, die Induktivität L1 und die zweite Diode D2 bilden eine zweite Reihenschaltung P2 zwischen dem zweiten Anschluss T2D des zweiten Schalters T2 und der Kathode der zweiten Diode D2, welche die Induktivität L1 mit der Kathode des ersten Diode D1 und der Anode der zweiten Diode D2 verbindet.

Die erste und zweite Steuerschaltung S1, S2 weisen Mittel auf, sodass bei Anlegen einer positiven ersten Spannung U1 an die erste Reihenschaltung P1 gegenüber dem zweiten Anschluss T2D des zweiten Schalters T2 zunächst der erste Schalter T1, und anschließend der zweite Schalter T2 leiten.

Bei Anlegen einer negativen ersten Spannung U1 an die erste Reihenschaltung P1 gegenüber dem zweiten Anschluss T2D des zweiten Schalters T2 sind die erste und zweite Steuerschaltung S1, S2 so konfiguriert, dass beide Schalter T1, T2 sperren.

Das Mittel der zweiten Steuerschaltung S2 bildet gemeinsam mit der Kapazität C1 ein Zeitglied.

Optional kann in die zweite Reihenschaltung P2 ein Shunt-Widerstand R1 in Serie eingefügt sein, an welchem eine dritte Spannung U3 messbar ist, um beispielsweise eine Betriebsüberwachung durchzuführen.

**Fig. 2** zeigt ein weiteres Ausführungsbeispiel einer erfindungsgemäßen Schaltung mit einer zusätzlichen Überbrückung.

Die gezeigte Schaltung beziehungsweise das System baut auf der Schaltung/ dem System der Fig. 1 auf, wobei ferner ein dritter und ein vierter Schalter T3, T4 umfasst sind. Es gelten daher auch die Ausführungen von vorher.

Die Schalter T3 und T4 sind dazu vorgesehen, um in einem entsprechenden Betriebsfall rasch die Strombegrenzung zu überbrücken. Dadurch können Verluste der Schaltung reduziert werden.

Der dritte und der vierte Schalter T3, T3 sind jeweils ein n-Kanal MOSFET.

Der dritte und vierte Schalter T3, T4 umfassen jeweils einen ersten (Source-) Anschluss T3S, T4S, einen zweiten (Drain-) Anschluss T3D, T4D und einen (Gate-) Steuer-Anschluss T3G, T4G,

Die ersten Anschlüsse T3S, T4S des dritten und vierten Schalters T3, T4 sind miteinander verbunden.

Der zweite Anschluss T3D des dritten Schalters T3 ist mit dem zweiten Anschluss T1D des ersten Schalters T1 sowie der zweite Anschluss T4D des vierten Schalters T4 mit der Kathode der zweiten Diode D2 verbunden.

Ferner ist eine dritte Steuerschaltung S3 vorgesehen, welche die Steuer-Anschlüsse T3G, T4G des dritten und vierten Schalters T3, T4 ansteuert.

Die erste Steuerschaltung S1 und/oder zweite Steuerschaltung S2 und/oder dritte Steuerschaltung S3 weist/weisen jeweils Mittel auf, welche aus einer zugeführten Spannung eine Spannung UGS1 bzw. UGS2 bzw. UGS3 bzw. UGS4 zur Steuerung des ersten Schalters T1 bzw. zweiten Schalters T2 bzw. dritten Schalters T3 bzw. vierten Schalters T4 vom sperrenden in den leitenden Zustand erzeugen, beispielsweise in Form eines ohmschen Spannungsteilers.

### Bezugszeichenliste:

- B1: Akkumulator/ Batterie
- C1: Kapazität
- D1, D2: Diode
- L1: Induktivität
- P1, P2, P3: Pfad der Reihenschaltung
- PSU1: Stromversorgung
- R1: Widerstand
- S1, S2, S3: Steuer-Schaltung
- T1, T2, T3, T4: Schalter, n-Kanal MOS-FET Transistor
- T1D, T2D, T3D, T4D: zweiter Anschluss, Drain
- T1G, T2G, T3G, T4G: Steuer-Anschluss, Gate
- T1S, T2S, T3S, T4S: erster Anschluss, Source
- U1, U2, U3, UGS1, UGS2, UGS3, UGS4: Spannung
- X1, X2, X3, X4: Verbindungs-Kontaktpunkt

## Patentansprüche

1. Elektronische Schaltung zum Schutz vor Verpolung eines angeschlossenen Geräts (PSU1), umfassend einen ersten und einen zweiten Schalter (T1, T2) mit jeweils einem ersten Anschluss (T1S, T2S), einem zweiten Anschluss (T1D, T2D) und einem Steuer-Anschluss (T1G, T2G), eine erste und eine zweite Diode (D1, D2), eine Kapazität (C1), eine Induktivität (L1), eine erste und eine zweite Steuerschaltung (S1, S2),
wobei eine erste Reihenschaltung (P1) zwischen einem ersten und einem zweiten Kontaktpunkt (X1, X2) den ersten und den zweiten Schalter (T1, T2) und die erste Diode (D1) umfasst, und die Kathode der ersten Diode (D1) zum zweiten Kontaktpunkt (X2) hin orientiert ist,
und eine zweite Reihenschaltung (P2) zwischen einem dritten und einem vierten Kontaktpunkt (X3, X4) den zweiten Schalter (T2), die erste und die zweiten Diode (D1, D2) und die Induktivität (L1) umfasst, und die Kathode der zweiten Diode (D2) zum dritten Kontaktpunkt (X3) hin orientiert ist,
und eine dritte Reihenschaltung (P3) zwischen dem zweiten und dem dritten Kontaktpunkt (X2, X3) den ersten Schalter (T1), die Induktivität (L1) und die zweite Diode (D2) umfasst,
und die erste Steuerschaltung (S1) den ersten Anschluss (T1S) und den Steuer-Anschluss (T1G) des ersten Schalters (T1) verbindet, und
und die zweite Steuerschaltung (S2) den ersten Anschluss (T2S) und den Steuer-Anschluss (T2G) des zweiten Schalters (T2) verbindet, und
ferner die Kapazität (C1) den zweiten Kontaktpunkt (X2) mit dem ersten Anschluss (T2S) des zweiten Schalters (T2) verbindet, und
und die erste und zweite Steuerschaltung (S1, S2) Mittel aufweisen, welche bei Anlegen einer ersten Spannung (U1) an den zweiten Kontaktpunkt (X2) gegenüber dem ersten Kontaktpunkt (X1) so konfiguriert sind, sodass,
falls die erste Spannung (U1) einen positiven Wert annimmt, zunächst eine erste und zweite Steuer-Spannung (UGS1, UGS2) zur Steuerung des ersten und zweiten Schalters (T1, T2) erzeugt werden, welche dazu vorgesehen sind, dass zunächst der erste Schalter (T1) und anschließend der zweite Schalter (T2) leitet, und
falls die erste Spannung (U1) einen negativen Wert annimmt, die erste und zweite Steuer-Spannung (UGS1, UGS2) erzeugt werden, welche dazu vorgesehen sind, dass der erste und der zweite Schalter (T1, T2) sperren.

2. Schaltung nach dem vorhergehenden Anspruch, wobei die erste Spannung (U1) die Betriebsspannung eines Akkumulators oder einer Batterie (B1) ist.

3. Schaltung nach einem der vorhergehenden Ansprüche, wobei der erste und zweite Schalter (T1, T2) jeweils ein Feldeffekt-Transistor ist, bevorzugt ein MOSFET, besonders bevorzugt ein n-Kanal MOSFET.

4. Schaltung nach einem der vorhergehenden Ansprüche, wobei das Mittel der zweiten Steuerschaltung (S2) gemeinsam mit der Kapazität (C1) ein Zeitglied bildet.

5. Schaltung nach einem der vorhergehenden Ansprüche, wobei in die zweite Reihenschaltung (P2) ein Shunt-Widerstand (R1) eingefügt ist, vorzugsweise zwischen dem zweiten Anschluss (T2D) des zweiten Schalters (T2) und dem vierten Kontaktpunkt (X4), an welchem Shunt-Widerstand (R1) eine dritte Spannung (U3) messbar ist.

6. Schaltung nach einem der vorhergehenden Ansprüche, wobei ferner ein dritter und ein vierter Schalter (T3, T4) mit jeweils einem ersten Anschluss (T3S, T4S), einem zweiten Anschluss (T3D, T4D) und einem Steuer-Anschluss (T3G, T4G), umfasst sind, und die ersten Anschlüsse (T3S, T4S) des dritten und vierten Schalters (T3, T4) miteinander verbunden sind, und der zweite Anschluss (T3D) des dritten Schalters (T3) mit dem zweiten Kontaktpunkt (X2), sowie der zweite Anschluss (T4D) des vierten Schalters (T4) mit dem dritten Kontaktpunkt (X3) verbunden ist, und
ferner eine dritte Steuerschaltung (S3) vorgesehen ist, Mittel aufweist, welche bei Anlegen einer ersten Spannung (U1) an den zweiten Kontaktpunkt (X2) gegenüber dem ersten Kontaktpunkt (X1) so konfiguriert ist, sodass,
falls die erste Spannung (U1) einen positiven Wert annimmt, der dritte und vierte Schalter (T3, T4) leiten, wenn die erste Spannung (U1) einen positiven Wert annimmt, und
falls die erste Spannung (U1) einen negativen Wert annimmt, der dritte und vierte Schalter (T3, T4) sperren.

7. Schaltung nach dem vorhergehenden Anspruch, wobei der dritte und vierte Schalter (T3, T3) jeweils ein FeldeffektTransistor ist, bevorzugt ein MOSFET, besonders bevorzugt ein n-Kanal MOSFET.

8. System zum Betrieb einer unterbrechungsfreien Stromversorgung (PSU1), umfassend einen Akkumulator oder eine Batterie (B1) und eine Schaltung nach einem der vorhergehenden Ansprüche, wobei die erste Spannung (U1) durch die Betriebsspannung der Akkumulators bzw. der Batterie (B1) gebildet ist und die zweite Spannung (U2) zum Betrieb der unterbrechungsfreien Stromversorgung (PSU1) vorgesehen ist.
